# EUROPEAN PATENT SPECIFICATION

(11) **EP 3 214 309 B1**
(45) Date of publication and mention of the grant of the patent: **04.03.2020**
(21) Application number: 17151528.1
(22) Date of filing: 13.01.2017
(51) Int. Cl.: F04B 39/10, F04B 39/12, F04B 35/04

(54) **IMPROVED AIR COMPRESSOR**
VERBESSERTER LUFTKOMPRESSOR
COMPRESSEUR D'AIR AMÉLIORÉ

(30) Priority: 14.01.2016 TW 105101152
(43) Date of publication of application: 06.09.2017
(73) Proprietor: Chou, Wen-San, Tainan City (TW)
(72) Inventor: Chou, Wen-San, Tainan City (TW)
(74) Representative: Lang, Christian

(56) References cited:
- WO-A1-2004/101993
- WO-A1-2014/056133
- WO-A2-2007/129804
- DE-U1-202015 101 979
- FR-A1- 2 597 951
- JP-U- 3 201 508
- US-A- 3 384 298
- US-A- 4 854 839
- US-A1- 2015 158 638
- US-A1- 2015 297 039

## Description

### (a) Technical Field of the Invention

The present invention relates to an air compressor and, more particularly, to an improved air compressor which includes a cylinder being fitted with a piston body and defining a plurality of exit holes of approximately equal dimension, so that compressed air produced in the cylinder may quickly enter an air storage container, so that the piston body can conduct reciprocating motion more smoothly and thus the performance of the air compressor can be increased.

### (b) Description of the Prior Art

Currently, an air compressor basically has a cylinder which allows a piston body to conduct reciprocating motion therein to produce compressed air which can overcome a valve mechanism, so that the compressed air can flow through an exit hole of the cylinder to enter the inner space of an air storage container or an air tank. The air storage container is provided with outlets for delivering the compressed air to an object to be inflated.

In conventional air compressors, there is only one exit hole defined at the cylinder for communicating with the air storage container. The exit hole of the cylinder is controlled by a valve mechanism, which generally includes a plug and a compression spring, so that the exit hole can be opened or closed properly according to the pressure of the compressed air. In operation, the compressed air produced in the cylinder can overcome the compressive force of the compression spring to enter the inner space of the air compressor. However, the compressed air stored in the air storage container can exert a back force on the plug, thus restraining the plug being moved away from the exit hole. As a result, the piston body, which conducts reciprocating motion in the cylinder, will be subjected to greater resistance. Therefore, the piston body may not move smoothly in the cylinder, and thus the speed of inflating an object will become slow. Furthermore, the motor of the air compressor may become too hot, thus decreasing the performance of the motor. Even worse, the motor may be under the risk of burning out.

In view of the foregoing, it is an object of the present invention to develop an improved air compressor which can solve the shortcomings of conventional air compressors.

From patent specification US 3384298 A an air compressor is known whose valve plate has a plurality of suction ports and a plurality of discharge ports. The suction ports are of the same dimension and also the discharge ports are of the same dimension. The suction ports and the discharge ports are covered by a valve lamina, respectively.

Utility model specification JP 3201508 U discloses an air compressor whose motor rotates a gear which drives the piston of the air compressor. The cylinder of the air compressor has a single exit hole in the top wall thereof, which exit hole is covered by a plug being driven by a compression spring. The air compressor described in this utility model specification comprises the features of the preamble of claim 1.

The document WO 2007/129804 discloses an axial piston compressor with two exit holes and a regulating mechanism for closing the holes.

### SUMMARY OF THE INVENTION

The present invention provides an air compressor having the features of claim 1. Further embodiments are subject-matter of the dependent claims.

The improved air compressor according to the present invention comprises a cylinder, wherein the cylinder at a top wall thereof defines a plurality of exit holes, through which a large amount of compressed air produced in the cylinder may enter an air storage container in a short time.

The cylinder of the improved air compressor is fitted with a piston body and defines a plurality of exit holes of approximately equal dimension, so that a large amount of compressed air produced in the cylinder may enter an air storage container in a short time. Since the compressed air can quickly enter the air storage container, the piston body can conduct reciprocating motion more smoothly and thus the performance of the air compressor and the speed of inflating an object can be increased.

Other objects, advantages and novel features of the present invention will become more apparent from the following detailed description when taken in conjunction with the accompanying drawings.

### BRIEF DESCRIPTION OF THE DRAWINGS

FIG. 1 shows a 3-dimensional view of an air compressor according to one embodiment of the present invention.
FIG. 2 shows an exploded view of the air compressor.
FIG. 3 shows a plan view of the air compressor, wherein a plurality of exit holes defined at a cylinder thereof are revealed.
FIG. 4 shows a plan view of the air compressor, wherein a plurality of plugs being used to seal the exit holes are revealed.
FIG. 5 shows a 3-dimensional view of an air storage container used in the air compressor, wherein a plurality of columns provided at an inner surface of the air storage container are revealed.
FIG. 6 shows a plan view of the air compressor, wherein the air storage container is assembled onto the cylinder.
FIG. 7 shows a sectional view of the air compressor taken along line A-A in FIG. 6.
FIG. 8 shows a plan view of the air compressor, wherein a gear and a piston body used in the air compressor are revealed.
FIG. 9 shows an exploded view of an air compressor according to another embodiment of the present invention.
FIG. 10 shows an exploded view of an air compressor according to a further embodiment of the present invention.
FIG. 11 shows an exploded view of an air compressor according to a still further embodiment of the present invention.
FIG. 12 shows an exploded view of an air compressor according to a yet still further embodiment of the present invention.

### DETAILED DESCRIPTION OF THE PREFERRED EMBODIMENTS

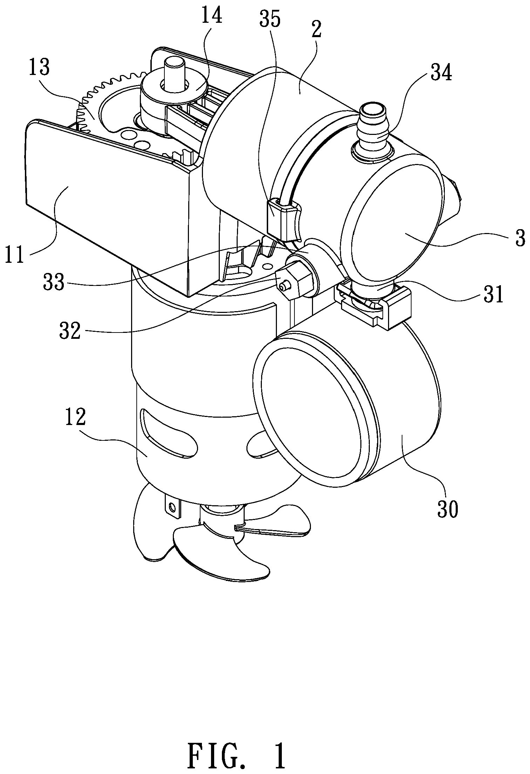

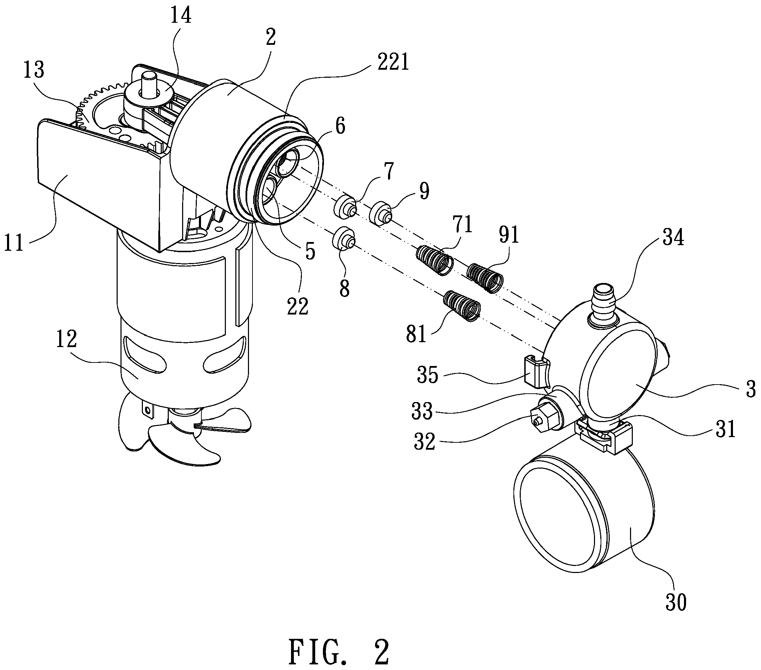

Referring to FIGS. 1 and 2, an air compressor according to one embodiment of the present invention is shown, which generally comprises a cylinder 2 fitted with a piston body 14, and a main frame 11 for mounting a motor 12 which can rotate a gear 13 to drive the piston body 14 to conduct reciprocating motion for producing compressed air in the cylinder, which may enter an air storage container 3 provided with one or more outlets for supplying air to various devices. For example, the outlet 31 can be used for connecting with a pressure gauge 30, the outlet 33 can be used for connecting with a relief valve 32, and the outlet 34 can be connected with a hose for inflating an object (not shown).

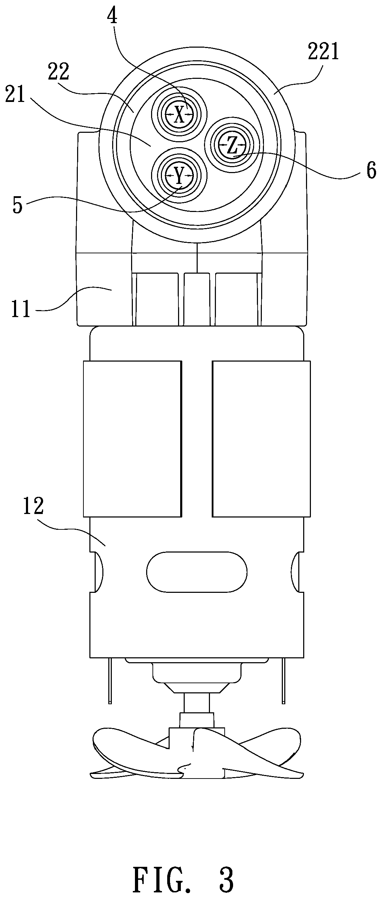

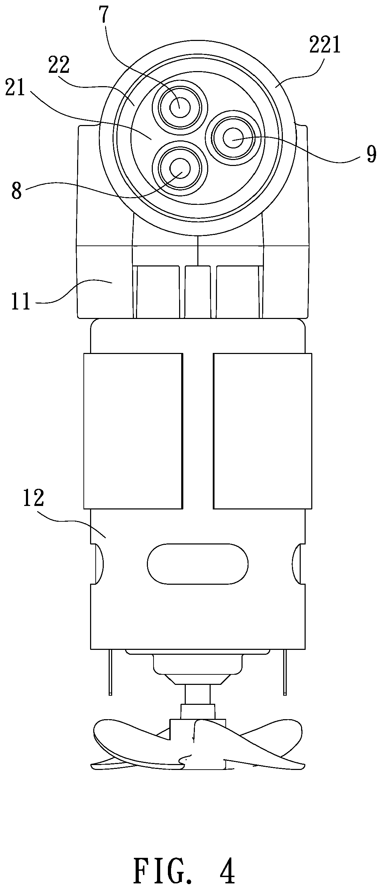

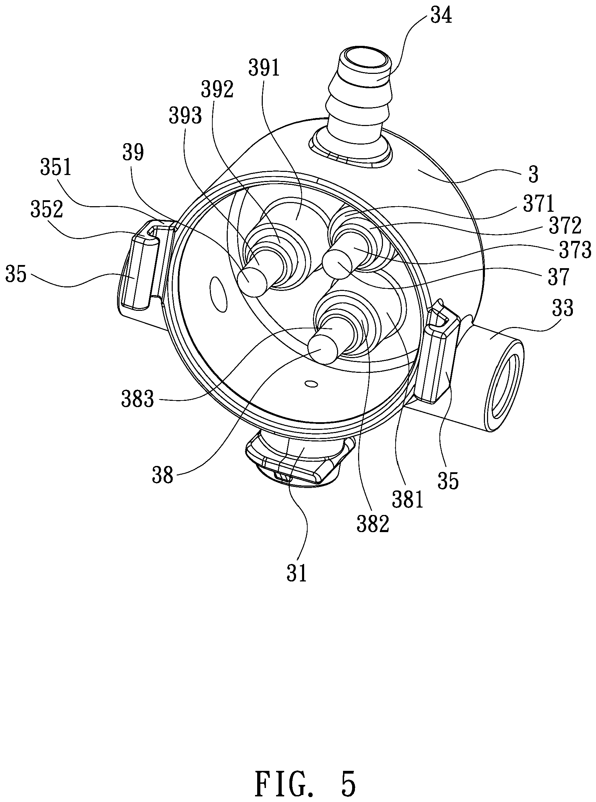

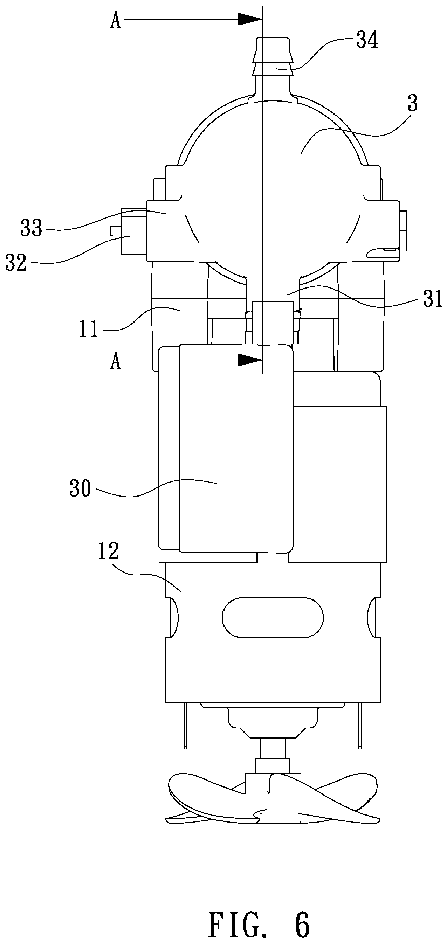

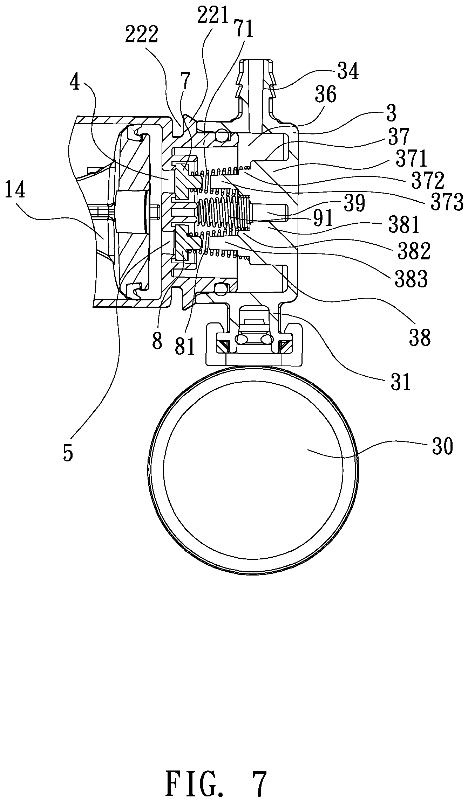

Referring to FIGS. 2 through 7, the air compressor is designed in a way different from conventional technology. The cylinder 2, which defines three exit holes 4, 5, 6 at its top wall 21, is formed integrally with the main frame 11 by plastic material. The exit holes 4, 5, 6 are approximately equal in dimension. As shown in FIG. 3, the exit hole 4 is defined to have a diameter of (X), the exit hole 5 is defined to have a diameter of (Y), and the exit hole 6 is defined to have a diameter of (Z), wherein X = Y = Z; namely, the exit holes 4, 5, 6 have the same diameter. The exit holes 4, 5, 6 are regulated by a control mechanism to be opened or closed. The control mechanism includes a plurality of plugs 7, 8, 9 and a plurality of compression springs 71, 81, 91, corresponding to plugs 7, 8, 9. The compression springs 71, 81, 91 can urge the plugs 7, 8, 9 to seal the exit holes 4, 5, 6, respectively (see FIGS 2, 4 and 7). The cylinder 2 has a tubular projection 22 formed on the top wall 21. The tubular projection 22 is provided with a circular flange 221 at its outer surface and defines an annular groove 222 between the circular flange 221 and the top wall 21. The air storage container 3 is provided with two opposite coupling means 35 (see FIG. 5), each of which includes a base portion 351 extending outwardly from a bottom edge of the air storage container 3, and an L-shaped holding portion 352 integrally formed at one end of the base portion 351 distal from the bottom edge of the air storage container 3. Furthermore, the air storage container 3 is provided at an inner surface thereof with a plurality of columns 37, 38, 39 corresponding to the compression springs 71, 81, 91. The column 37 has a base round portion 371, a middle round portion 372, and an end round portion 373; the column 38 has a base round portion 381, a middle round portion 382, and an end round portion 383; the column 39 has a base round portion 391, a middle round portion 392, and an end round portion 393; wherein the diameter of the base round portion 371, 381 or 391 is greater than that of the corresponding middle round portion 372, 382 or 392, and the diameter of the middle round portion 372, 382 or 392 is greater than that of the corresponding end round portion 373, 383 or 393. The L-shaped holding portions 352 of the coupling means 35 of the air storage container 3 can be inserted into the annular groove 222 and engaged with the circular flange 221, so that the air storage container 3 can be detachably assembled onto the cylinder 2. As shown in FIG. 7, each of the compression springs 71, 81, 91 has one end forcing against the corresponding plug 7, 8 or 9, and has another end being fitted around the middle round portion 372, 382 or 392 of the corresponding column and forcing against the base round portion 371, 381 or 391 of the corresponding column. Each of the end round portions 373, 383, 393 of the columns 37, 38, 39 is located at a predetermined height above the corresponding plug so as to limit the movement of the corresponding plug. FIG. 1 shows the air storage container 3 being assembled onto the cylinder 2.

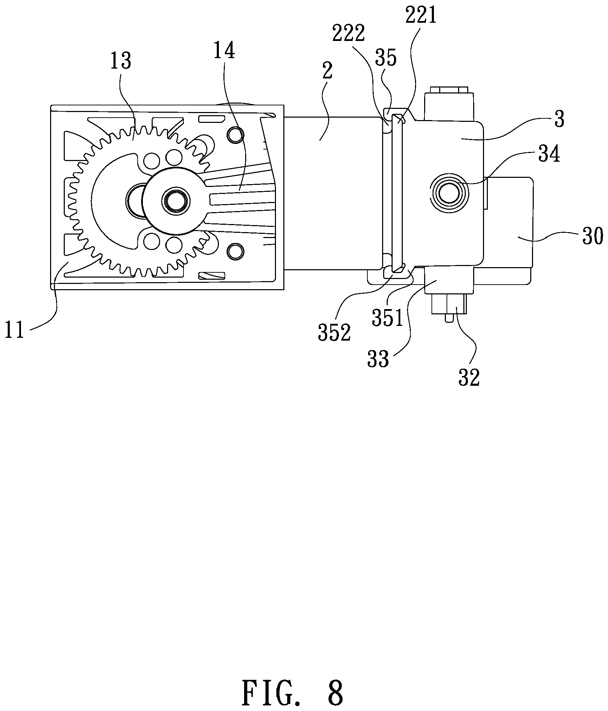

Referring to FIGS. 7 and 8, when the piston body 14 conducts reciprocating motion, the compressed air produced in the cylinder 2 can overcome the force of the compression springs 71, 81, 91 exerted on the plugs 7, 8, 9, thus pushing the plugs 7, 8, 9 away from the exit holes 4, 5, 6, respectively, so that the compressed air can flow into the inner space 36 of the air storage container 3. Initially, since the compressed air can flow into the inner space 36 of the air storage container 3 simultaneously via the exit holes 4, 5, 6, the air storage container 3 can be filled with a large amount of air in a short time. Later, since there is a large amount of air having entered the inner space 36 of the air storage container 3, the air contained in the air storage container 3 can exert a greater back force on the plugs 7, 8, 9 compared to the air initially contained in the air storage container 3. In other words, the piston body 14 may experience greater resistance in conducting reciprocating motion, and thus may cause the exit holes 4, 5, 6 more difficult to be opened. However, upon a decrease of the pressure of the air contained in the air storage container 3, the back force exerted on the plugs 7, 8, 9 will decrease and this allows the compressed air produced in the cylinder 2 to quickly enter the inner space 36 of the air storage container 3. Considering the operation of the air compressor as a whole, since the multiple exit holes allow the piston body 14 to conduct reciprocating motion more smoothly, the performance of the air compressor can be increased. Thus, the air compressor can inflate an object more quickly.

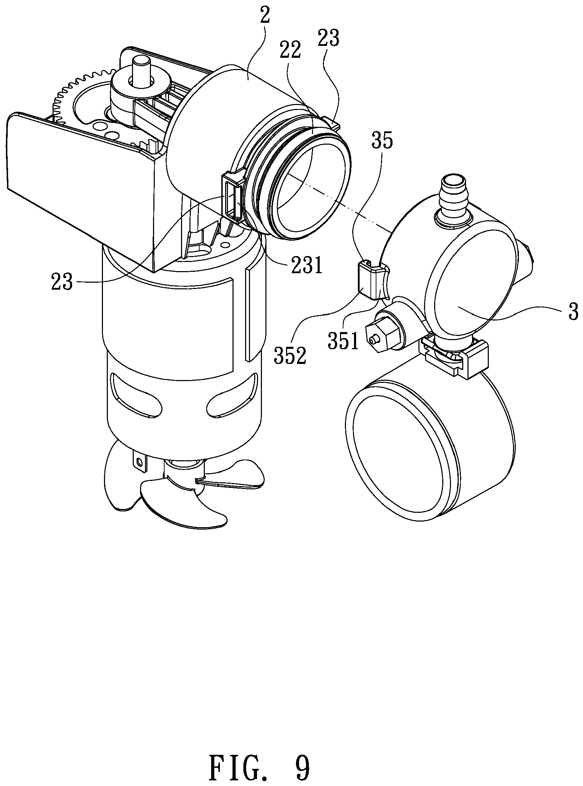

FIG. 9 shows another embodiment of the present invention, wherein the tubular projection 22 is provided at its outer surface with two opposite lugs 23 each having an engagement section 231. The L-shaped holding portions 352 of the two coupling means 35 can engage with the engagement sections 231 of the two lugs 23, so that the air storage container 3 can be detachably assembled onto the cylinder 2.

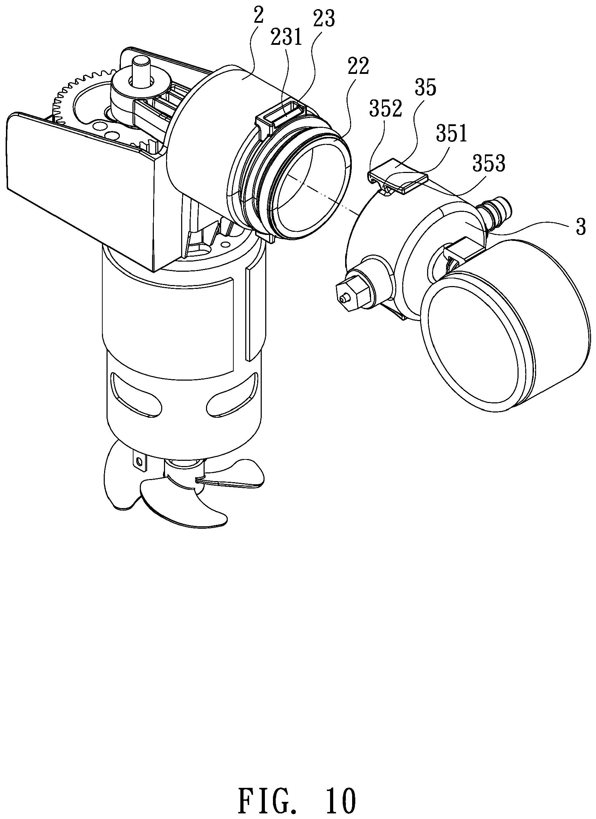

FIG. 10 shows a further embodiment of the present invention, wherein the tubular projection 22 is provided at its outer surface with two opposite lugs 23 each having an engagement section 231. The L-shaped holding portions 352 of the two coupling means 35 can engage with the engagement sections 231 of the two lugs 23, so that the air storage container 3 can be detachably assembled onto the cylinder 2. Besides, each of the two coupling means 35 further includes an operation portion 353, which is a resilient member and integrally formed at one end of the base portion 351 distal from the bottom edge of the air storage container 3 and located at a side of the base portion 351 opposite to the L-shaped holding portion 352. As such, a user may depress the operation portions 353 to have the L-shaped holding portions 352 disengaged from the lugs 23, so that the air storage container 3 can be dissembled from the cylinder 2 conveniently when maintenance is required.

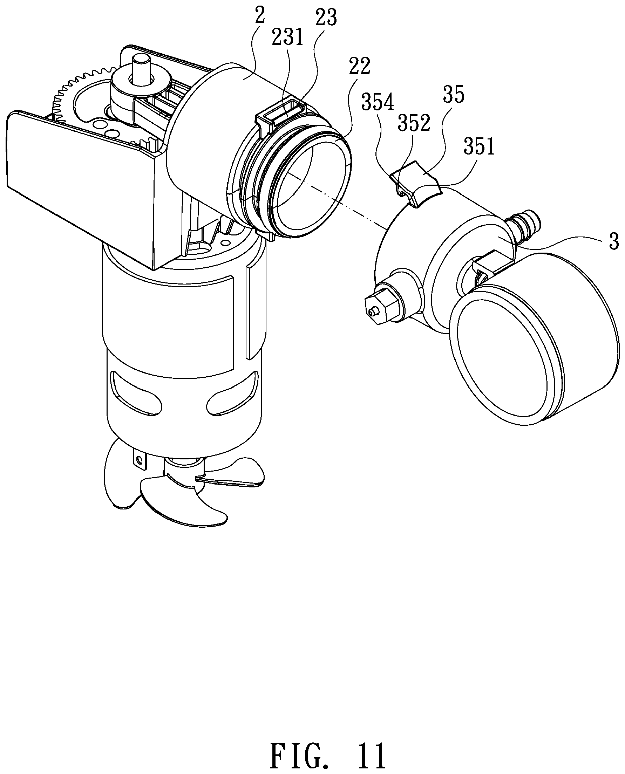

FIG. 11 shows a still further embodiment of the present invention, wherein the tubular projection 22 is provided at its outer surface with two opposite lugs 23 each having an engagement section 231. The L-shaped holding portions 352 of the two coupling means 35 can engage with the engagement sections 231 of the two lugs 23, so that the air storage container 3 can be detachably assembled onto the cylinder 2. Besides, each of the two coupling means 35 further includes an operation portion 354, which is a resilient member and extends from the L-shaped holding portion 352 in a direction opposite to the base portion 351. As such, a user may pull the operation portions 354 outwardly from the cylinder 2 to have the L-shaped holding portions 352 disengaged from the lugs 23, so that the air storage container 3 can be dissembled from the cylinder 2 easily when maintenance is required.

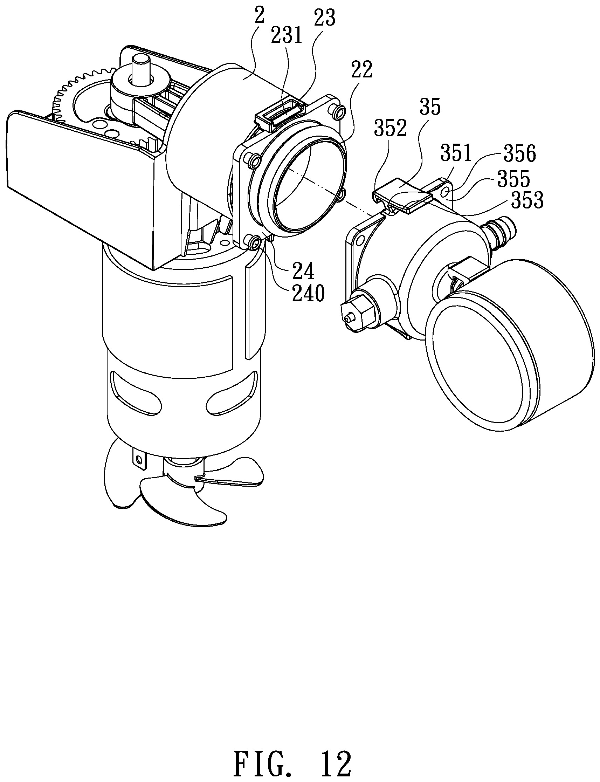

FIG. 12 shows a yet still further embodiment of the present invention, wherein the tubular projection 22 is provided at its outer surface with two opposite lugs 23 each having an engagement section 231. The tubular projection 22 is further provided at its outer surface with a first rectangular flange 24 which defines a plurality of positioning holes 240. The air storage container 3 is further provided at its bottom edge with a second rectangular flange 355 which defines a plurality of positioning holes 356 corresponding to the positioning holes 240 of the first rectangular flange 24. In addition to the L-shaped holding portions 352 of the coupling means 35 being engaged with the engagement sections 231 of the lugs 23, the first and second flanges 24, 355 can be attached together by fasteners fitted through the first and second positioning holes 240, 356. As such, the air storage container 3 can be assembled onto the cylinder 2 more securely.

As a summary, the air compressor of the present invention has a breakthrough over the prior art in that the top wall 21 of the cylinder 2 defines a plurality of exit holes 4, 5, 6, which are approximately equal in dimension and controlled by the plugs 7, 8, 9 to allow the compressed air produced in the cylinder 2 to quickly enter the inner space 36 of the air storage container 3, so that the piston body 14 can conduct reciprocating motion more smoothly and thus the performance of the air compressor can be increased. These features render the air compressor of the present invention useful and inventive.

## Claims

1. An air compressor including a main frame (11) for mounting a motor (12) which rotates a gear to drive a piston body (14) fitted in a cylinder (2) to conduct reciprocating motion for producing compressed air which enters an inner space (36) of an air storage container (3) wherein the cylinder (2) defines a top wall (21) thereof a plurality of exit holes (4, 5, 6) of equal dimension, wherein the exit holes (4, 5, 6) are regulated by a control mechanism to be opened or closed, the control mechanism including a plurality of plugs and a plurality of compression springs capable of urging the plugs to seal the exit holes, respectively,
**characterised in that**
the air storage container (3) is provided with two opposite coupling means (35) at a bottom edge thereof, each coupling means including a base portion (351) extending outwardly from the bottom edge of the air storage container (3), and an L-shaped holding portion (352) integrally formed at one end of the base portion (351) distal from the bottom edge of the air storage container (3).

2. The air compressor of claim 1, wherein the cylinder (2) defining the exit holes (4, 5, 6) is formed integrally with the main frame (11) by plastic material.

3. The air compressor of claim 1, wherein the exit holes (4, 5, 6) are defined to be equal in diameter.

4. The air compressor of claim1, wherein the cylinder (2) has a tubular projection (22) formed on the top wall (21), the tubular projection (22) provided at its outer surface with a circular flange (221) and defining an annular groove (222) between the circular flange (221) and the top wall (21) for allowing the L-shaped holding portions (352) of the air storage container (3) to be inserted into the annular groove (222) and engaged with the circular flange (221), so that the air storage container (3) can be detachably assembled onto the cylinder (2); the air storage container (3) is provided at an inner surface thereof with a plurality of columns (37, 38, 39) corresponding to the compression springs (71, 81, 91), each of the columns (37, 38, 39) having a base round portion (371, 381, 391), a middle round portion (372, 382, 392), and an end round portion (373, 383, 393); each of the compression springs (71, 81, 91) has one end forcing against the corresponding plug, and has another end being fitted around the middle round portion of the corresponding column and forcing against the base round portion of the corresponding column, wherein each of the end round portions of the columns is located at a predetermined height above the corresponding plug so as to limit the movement of the corresponding plug.

5. The air compressor of claim1, wherein the cylinder (2) has a tubular projection (22) formed on the top wall (21), the tubular projection (22) provided at its outer surface with two opposite lugs (23) each having an engagement section (231), the L-shaped holding portions (352) of the two coupling means (35) capable of engaging with the engagement sections (231) of the two lugs (23), so that the air storage container can be detachably assembled onto the cylinder (2).

6. The air compressor of claim 1, wherein the cylinder (2) has a tubular projection (22) formed on the top wall (21), the tubular projection (22) provided at its outer surface with two opposite lugs (23) each having an engagement section (231), the L-shaped holding portions (352) of the two coupling means (35) capable of engaging with the engagement sections (231) of the two lugs (23), each of the two coupling means (35) further including an operation portion (353) which is integrally formed at one end of the base portion (351) distal from the bottom edge of the air storage container (3) and located at a side of the base portion (351) opposite to the L-shaped holding portion (352), so that the air storage container (3) can be detachably and conveniently assembled onto the cylinder (2).

7. The air compressor of claim 1, wherein the cylinder (2) has a tubular projection (22) formed on the top wall (21), the tubular projection (22) provided at its outer surface with two opposite lugs (23) each having an engagement section (231), the L-shaped holding portions (352) of the two coupling means (35) capable of engaging with the engagement sections (231) of the two lugs (23), each of the two coupling means (35) further including an operation portion (354) extending from the L-shaped holding portion (352) in a direction opposite to the base portion (351), so that the air storage container (3) can be detachably and conveniently assembled onto the cylinder (2).

8. The air compressor of claim 1, wherein the cylinder (2) has a tubular projection (22) formed on the top wall (21), the tubular projection (22) provided at its outer surface with two opposite lugs (23) each having an engagement section (231), the L-shaped holding portions (352) of the two coupling means (35) capable of engaging with the engagement sections (231) of the two lugs (23), the tubular projection (22) further provided at its outer surface with a first rectangular flange (24) defining a plurality of positioning holes (240), the air storage container (3) further provided at its bottom edge with a second rectangular flange (355) defining a plurality of positioning holes (356) corresponding to the positioning holes (240) of the first rectangular flange (24), so that the air storage container (3) can be detachably and securely assembled onto the cylinder (2).

## Patentansprüche

1. Luftkompressor, der einen Hauptrahmen (11) zum Anbringen eines Motors (12) umfasst, der ein Getriebe dreht, um einen in einen Zylinder (2) eingepassten Kolbenkörper (14) anzutreiben, um eine Pendelbewegung zur Erzeugung von Druckluft auszuführen, die in einen Innenraum (36) eines Luftspeicherbehälters (3) eindringt, wobei der Zylinder (2) an seiner oberen Wand (21) eine Vielzahl von Austrittslöchern (4, 5, 6) mit gleicher Dimension definiert, wobei die Austrittslöcher (4, 5, 6) von einem Steuermechanismus gesteuert werden, um geöffnet oder geschlossen zu werden, wobei der Steuermechanismus eine Vielzahl an Stopfen und eine Vielzahl an Kompressionsfedern umfasst, die entsprechend die Stopfen dazu bringen können, die Austrittslöcher zu verschließen,
**dadurch gekennzeichnet, dass**
der Luftspeicherbehälter (3) an seiner unteren Kante mit zwei entgegengesetzten Kopplungsmitteln (35) ausgestattet ist, wobei jedes Kopplungsmittel einen Basisabschnitt (351), der sich von dem unteren Rand des Luftspeicherbehälters (3) nach außen erstreckt, und einen L-förmigen Halteabschnitt (352) beinhaltet, der an einem Ende des Basisabschnitts (351), das von dem unteren Rand des Luftspeicherbehälters (3) entfernt ist, einstückig ausgebildet ist.

2. Luftkompressor nach Anspruch 1, bei dem der Zylinder (2), der die Austrittslöcher (4, 5, 6) definiert, einstückig mit dem Hauptrahmen (11) durch Kunststoffmaterial ausgebildet ist.

3. Luftkompressor nach Anspruch 1, bei dem die Austrittslöcher (4, 5, 6) so definiert sind, dass sie den gleichen Durchmesser aufweisen.

4. Luftkompressor nach Anspruch 1, bei dem der Zylinder (2) einen rohrförmigen Vorsprung (22) aufweist, der an der oberen Wand (21) ausgebildet ist, wobei der rohrförmige Vorsprung (22) an seiner Außenfläche mit einem kreisförmigen Flansch (221) versehen ist und eine ringförmige Nut (222) zwischen dem kreisförmigen Flansch (221) und der oberen Wand (21) ausbildet, damit die L-förmigen Halteabschnitte (352) des Luftspeicherbehälters (3) in die ringförmige Nut (222) eingeführt und mit dem kreisförmigen Flansch (221) in Eingriff gebracht werden können, so dass der Luftspeicherbehälter (3) lösbar auf dem Zylinder (2) montiert werden kann, wobei der Luftspeicherbehälter (3) an seiner Innenfläche mit einer Vielzahl an Säulen (37, 38, 39) versehen ist, die den Kompressionsfedern (71, 81, 91) entsprechen, wobei jede der Säulen (37, 38, 39) einen runden Basisabschnitt (371, 381, 391), einen runden Mittelabschnitt (372, 382, 392) und einen runden Endabschnitt (373, 383, 393) aufweist, wobei jede der Kompressionsfedern (71, 81, 91) ein Ende aufweist, das gegen den entsprechenden Stopfen drückt, und ein anderes Ende, das um den mittleren runden Abschnitt der entsprechenden Säule herum angebracht ist und gegen den unteren runden Abschnitt der entsprechenden Säule drückt, wobei jeder der runden Endabschnitte der Säulen sich in einer vorbestimmten Höhe über dem entsprechenden Stopfen befindet, um die Bewegung des entsprechenden Stopfens zu begrenzen.

5. Luftkompressor nach Anspruch 1, bei dem der Zylinder (2) einen rohrförmigen Vorsprung (22) aufweist, der an der oberen Wand (21) ausgebildet ist, wobei der rohrförmige Vorsprung (22) an seiner Außenfläche mit zwei gegenüberliegenden Ansätzen (23) versehen ist, die jeweils einen Eingriffsabschnitt (231) aufweisen, wobei die L-förmigen Halteabschnitte (352) der beiden Kupplungsmittel (35) mit den Eingriffsabschnitten (231) der beiden Ansätze (23) in Eingriff kommen können, so dass der Luftspeicherbehälter lösbar auf den Zylinder (2) montiert sein kann.

6. Luftkompressor nach Anspruch 1, bei dem der Zylinder (2) einen rohrförmigen Vorsprung (22) aufweist, der an der oberen Wand (21) ausgebildet ist, wobei der rohrförmige Vorsprung (22) an seiner Außenfläche mit zwei gegenüberliegenden Ansätzen (23) versehen ist, die jeweils einen Eingriffsabschnitt (231) aufweisen, wobei die L-förmigen Halteabschnitte (352) der beiden Kopplungsmittel (35) mit den Eingriffsabschnitten (231) der beiden Ansätze (23) in Eingriff kommen können, wobei jedes der beiden Kopplungsmittel (35) ferner einen Betätigungsabschnitt (353) umfasst, der einstückig an einem Ende des Basisabschnitts (351) ausgebildet ist, das von dem Rand des Bodens des Luftspeicherbehälters (3) entfernt ist und sich an einer Seite des Basisabschnitts (351) befindet, die dem L-förmigen Halteabschnitt (352) gegenüberliegt, so dass der Luftvorratsbehälter (3) abnehmbar und zweckmäßig an dem Zylinder (2) montiert werden kann.

7. Luftkompressor nach Anspruch 1; bei dem der Zylinder (2) einen rohrförmigen Vorsprung (22) aufweist, der an der oberen Wand (21) ausgebildet ist, wobei der rohrförmige Vorsprung (22) an seiner Außenfläche mit zwei gegenüberliegenden Ansätzen (23) versehen ist, die jeweils einen Eingriffsabschnitt (231) aufweisen, wobei die L-förmigen Halteabschnitte (352) der beiden Kopplungsmittel (35) mit den Eingriffsabschnitten (231) der beiden Ansätze (23) in Eingriff kommen können, wobei jedes der beiden Kopplungsmittel (35) ferner einen Betätigungsabschnitt (354) umfasst, der sich von dem L-förmigen Halteabschnitt (352) in einer Richtung entgegengesetzt zu dem Basisabschnitt (351) erstreckt, so dass der Luftspeicherbehälter (3) abnehmbar und zweckmäßig an dem Zylinder (2) montiert werden kann.

8. Luftkompressor nach Anspruch 1, bei dem der Zylinder (2) einen rohrförmigen Vorsprung (22) aufweist, der an der oberen Wand (21) ausgebildet ist, wobei der rohrförmige Vorsprung (22) an seiner Außenfläche mit zwei gegenüberliegenden Ansätzen (23) versehen ist, die jeweils einen Eingriffsabschnitt (231) aufweisen, wobei die L-förmigen Halteabschnitte (352) der beiden Kupplungsmittel (35) mit den Eingriffsabschnitten (231) der beiden Ansätze (23) in Eingriff kommen können, wobei der rohrförmige Vorsprung (22) ferner an seiner Außenfläche mit einem ersten rechteckigen Flansch (24) ausgestattet ist, der eine Vielzahl an Positionierlöchern (240) definiert, wobei der Luftspeicherbehälter (3) ferner an seiner Unterkante mit einem zweiten rechteckigen Flansch (355) ausgestattet ist, der eine Vielzahl an Positionierlöchern (356) definiert, die den Positionierlöchern (240) des ersten rechteckigen Flansches (24) entsprechen, so dass der Luftspeicherbehälter (3) lösbar und sicher an dem Zylinder (2) montiert werden kann.

## Revendications

1. Compresseur à air incluant un cadre principal (11) pour le montage d'un moteur (12) qui fait tourner un engrenage pour entraîner un corps de piston (14) inséré dans un cylindre (2) pour conduire un mouvement alternatif pour la production d'air comprimé qui entre dans un espace intérieur (36) d'un contenant de stockage d'air (3),
dans lequel le cylindre (2) définit une paroi supérieure (21) de celui-ci une pluralité de trous de sortie (4, 5, 6) de dimension égale, dans lequel les trous de sortie (4, 5, 6) sont régulés par un mécanisme de commande pour être ouverts ou fermés, le mécanisme de commande incluant une pluralité de bouchons et une pluralité de ressorts de compression aptes à pousser les bouchons pour sceller les trous de sortie respectivement,
**caractérisé en ce que**
le contenant de stockage d'air (3) est doté de deux moyens de couplage opposés (35) au niveau d'une arête inférieure de celui-ci, chaque moyen de couplage incluant une portion de base (351) s'étendant vers l'extérieur depuis l'arête inférieure du contenant de stockage d'air (3), et une portion de maintien en forme de L (352) formée d'un seul tenant au niveau d'une extrémité de la portion de base (351) distale de l'arête inférieure du contenant de stockage d'air (3).

2. Compresseur à air selon la revendication 1, dans lequel le cylindre (2) définissant les trous de sortie (4, 5, 6) est formé d'un seul tenant avec le cadre principal (11) par du matériau plastique.

3. Compresseur à air selon la revendication 1, dans lequel les trous de sortie (4, 5, 6) sont définis pour présenter un diamètre égal.

4. Compresseur à air selon la revendication 1, dans lequel le cylindre (2) présente une projection tubulaire (22) formée sur la paroi supérieure (21), la projection tubulaire (22) étant dotée au niveau de sa surface extérieure d'une bride circulaire (221) et définissant une rainure annulaire (222) entre la bride circulaire (221) et la paroi supérieure (21) pour permettre aux portions de maintien en forme de L (352) du contenant de stockage d'air (3) d'être insérées dans la rainure annulaire (222) et mises en prise avec la bride circulaire (221) de sorte que le contenant de stockage d'air (3) puisse être assemblé de manière détachable sur le cylindre (2); le contenant de stockage d'air (3) est doté au niveau d'une surface intérieure de celui-ci d'une pluralité de colonnes (37, 38, 39) correspondant aux ressorts de compression (71, 81, 91), chacune des colonnes (37, 38, 39) présentant une portion ronde de base (371, 381, 391), une portion ronde médiane (372, 382, 392), et une portion ronde d'extrémité (373, 383, 393); chacun des ressorts de compression (71, 81, 91) présente une extrémité poussant de force contre le bouchon correspondant, et présente une autre extrémité qui est insérée autour de la portion ronde médiane de la colonne correspondante et poussant de force contre la portion ronde de base de la colonne correspondante, dans lequel chacune des portions rondes d'extrémité des colonnes est positionnée à une hauteur prédéterminée au-dessus du bouchon correspondant de sorte à limiter le mouvement du bouchon correspondant.

5. Compresseur à air selon la revendication 1, dans lequel le cylindre (2) présente une projection tubulaire (22) formée sur la paroi supérieure (21), la projection tubulaire (22) étant dotée au niveau de sa surface extérieure de deux pattes opposées (23) présentant chacune une section de mise en prise (231), les portions de maintien en forme de L (352) des deux moyens de couplage (35) étant aptes à se mettre en prise avec les sections de mise en prise (231) des deux pattes (23) de sorte que le contenant de stockage d'air puisse être assemblé de manière détachable sur le cylindre (2).

6. Compresseur à air selon la revendication 1, dans lequel le cylindre (2) présente une projection tubulaire (22) formée sur la paroi supérieure (21), la projection tubulaire (22) étant dotée au niveau de sa surface extérieure de deux pattes opposées (23) présentant chacune une section de mise en prise (231), les portions de maintien en forme de L (352) des deux moyens de couplage (35) étant aptes à se mettre en prise avec les sections de mise en prise (231) des deux pattes (23), chacun des deux moyens de couplage (35) incluant en outre une portion de fonctionnement (353) qui est formée d'un seul tenant au niveau d'une extrémité de la portion de base (351) distale de l'arête inférieure du contenant de stockage d'air (3) et positionnée au niveau d'un côté de la portion de base (351) opposée à la portion de maintien en forme de L (352) de sorte que le contenant de stockage d'air (3) puisse être assemblé de manière détachable et facile sur le cylindre (2).

7. Compresseur à air selon la revendication 1, dans lequel le cylindre (2) présente une projection tubulaire (22) formée sur la paroi supérieure (21), la projection tubulaire (22) étant dotée au niveau de sa surface extérieure de deux pattes opposées (23) présentant chacune une section de mise en prise (231), les portions de maintien en forme de L (352) des deux moyens de couplage (35) étant aptes à se mettre en prise avec les sections de mise en prise (231) des deux pattes (23), chacun des deux moyens de couplage (35) incluant en outre une portion de fonctionnement (354) s'étendant depuis la portion de maintien en forme de L (352) dans une direction opposée à la portion de base (351) de sorte que le contenant de stockage d'air (3) puisse être assemblé de manière détachable et facile sur le cylindre (2).

8. Compresseur à air selon la revendication 1, dans lequel le cylindre (2) présente une projection tubulaire (22) formée sur la paroi supérieure (21), la projection tubulaire (22) étant dotée au niveau de sa surface extérieure de deux pattes opposées (23) présentant chacune une section de mise en prise (231), les portions de maintien en forme de L (352) des deux moyens de couplage (35) étant aptes à se mettre en prise avec les sections de mise en prise (231) des deux pattes (23), la projection tubulaire (22) étant en outre dotée au niveau de sa surface extérieure d'une première bride rectangulaire (24) définissant une pluralité de trous de positionnement (240), le contenant de stockage d'air (3) étant en outre doté au niveau de son arête inférieure d'une seconde bride rectangulaire (355) définissant une pluralité de trous de positionnement (356) correspondant aux trous de positionnement (240) de la première bride rectangulaire (24) de sorte que le contenant de stockage d'air (3) puisse être assemblé de manière détachable et solidement sur le cylindre (2).
